# EUROPEAN PATENT SPECIFICATION

(11) **EP 4 083 299 B1**
(45) Date of publication and mention of the grant of the patent: **09.10.2024**
(21) Application number: 20896234.0
(22) Date of filing: 24.11.2020
(51) Int. Cl.: D06F 35/00, D06F 33/34, D06F 39/08, D06F 103/04, D06F 105/02

(54) **WASHING APPARATUS**
WASCHMASCHINE
MACHINE À LAVER

(30) Priority: 04.12.2019 CN 201911228517
(43) Date of publication of application: 02.11.2022
(73) Proprietor: Qingdao Haier Washing Machine Co., Ltd., Qingdao, Shandong 266101 (CN); Haier Smart Home Co., Ltd., Qingdao, Shandong 266101 (CN)
(72) Inventor: ZHAO, Zhiqiang, Qingdao, Shandong 266101 (CN); XU, Sheng, Qingdao, Shandong 266101 (CN)
(74) Representative: Budde Schou A/S
(86) International application number: PCT/CN2020/131033
(87) International publication number: WO 2021/109896

(56) References cited:
- WO-A1-2018/186164
- WO-A1-2018/216288
- CN-A- 103 061 079
- CN-A- 107 583 480
- CN-A- 107 850 236
- CN-A- 110 494 606
- CN-A- 110 506 140
- JP-A- 2015 093 219
- JP-A- 2015 093 219
- JP-A- 2018 118 175

## Description

### FIELD OF THE INVENTION

The present invention relates to a washing apparatus, and specifically relates to a water supply method for a washing apparatus and a washing apparatus using the water supply method.

### BACKGROUND OF THE INVENTION

Micro-bubbles usually refer to tiny bubbles with a diameter below 50 micrometers (µm) during bubbles generation. Micro-bubbles may also be called micro-/nano-bubbles, micron-bubbles or nano-bubbles depending on their ranges of diameter. Micro-bubbles can make atomic groups of water molecules smaller. Therefore, gas molecules in the micro-bubbles are easier to dissolve into gaps of the atomic groups. At the same time, the gas molecules break the interface of water and are easier to dissolve into water. The water molecules can always maintain Brownian motion and collide continuously. At the same time, the micro-bubbles are also sinking and breaking up, and the gas stored in the micro-bubbles will rise. This results in a greatly reduced rising rate of the micro-bubbles. Since the micro-bubbles rise slowly, a confluence period of the micro-bubbles (i.e., the lifespan of the micro-bubbles) is greatly extended. During this process, the micro-bubbles aggregate and move in the liquid, resulting in a high melting efficiency. When a large number of micro-bubbles break up in the water, a large amount of blasting power will be released, forming negative ion water in the water, which makes it easy to adsorb positively charged foreign matters floating in the liquid. The result is that the foreign matters will be adsorbed by the micro-bubbles after the foreign matters are destroyed by the breaking up of the micro-bubbles, and then slowly float to the surface of the liquid. These properties enable the micro-bubbles to have very strong cleaning and purifying ability. In addition, the micro-bubbles can form ultrasonic waves of a certain frequency when they explode, so they can sterilize. At present, the micro-bubbles have been widely used in washing apparatuses such as a washing machine. For example, published Japanese patent application JP 2015093219A discloses a micro-bubble generator. Published Japanese patent application JP2018118175A, published PCT patent applications WO2018186164A1 and WO2018216288A1 each disclose a washing machine including a micro-bubble generator for generating micro-bubble water injected into a detergent box.

Further, for example, Chinese patent publication for invention CN110073050A also discloses a washing machine and a cleaning method. Specifically, the washing machine is provided with a water injection device which includes a first water inflow valve, a second water inflow valve and a third water inflow valve, and a micro-bubble generator is arranged downstream of the first water inflow valve and upstream of a detergent box. The micro-bubble generator has a throttling part, a direct through part and a protruding part. The protruding part is arranged downstream of the throttling part and positioned in the middle of the direct through part, and micro-bubbles are generated in the water by locally constricting a cross section of flow passage. When the first water inflow valve is opened, micro-bubble water can be supplied to the detergent box through the micro-bubble generator for dissolving the detergent. The second water inflow valve is used to supply tap water to the detergent box. By controlling opening and closing durations or timing of the first water inflow valve and the second water inflow valve, a mixing ratio of the micro-bubble water and the tap water in the washing liquid can be controlled. However, the defect of the washing machine disclosed in CN110073050A is that the generation of micro-bubbles by the micro-bubble generator completely depends on the air dissolved in the tap water itself, so it is impossible to generate enough micro-bubbles in the water, and the use of the protruding part to form micro-bubbles leads to an efficiency not high enough. In addition, CN110073050A does not mention how to inject the micro-bubble water and the tap water. The main consequence caused by these defects to the washing machine is that the detergent cannot be dissolved efficiently enough, and a water saving effect of the washing machine is not good enough.

Accordingly, there is a need in the art for a new technical solution to solve the above problem.

### SUMMARY OF THE INVENTION

In order to solve the technical problem that the detergent dissolving efficiency of the existing washing machines is not high enough and the water saving effect is not good enough, the present invention provides a washing apparatus as set out in the appended set of claims.

It can be understood by those skilled in the art that in the technical solutions of the present invention, the washing apparatus has a micro-bubble spray head for generating micro-bubble water. The micro-bubble spray head includes a one-piece spray pipe, and a micro-bubble bubbler fixed at an outlet end of the one-piece spray pipe. A diameter-decreased conical passage part is arranged in the one-piece spray pipe, and an at-least-one-stage diameter-decreased conical passage is formed in the diameter-decreased conical passage part in a water flow direction and is configured to pressurize the water flow. A spray hole is formed at a downstream end of the diameter-decreased conical passage part, and the spray hole is configured such that the water flow pressurized by the at-least-one-stage diameter-decreased conical passage generates a negative pressure in the one-piece spray pipe after being expanded and sprayed from the spray hole so that air can be sucked in. An air inflow passage is arranged on the one-piece spray pipe and is positioned such that a large amount of air can be sucked into the one-piece spray pipe through the air inflow passage by means of the negative pressure and mix with the water flow to produce bubble water. When the bubble water passes through the micro-bubble bubbler, micro-bubble water is formed. Therefore, bubble water containing a large number of micro-bubbles can be generated in the washing apparatus through the micro-bubble spray head of this design. By firstly injecting such micro-bubble water into the washing apparatus, not only the detergent or washing powder can be dissolved efficiently and deposition of the detergent or washing powder can be avoided, but also the amount of water used can be reduced without lowering the washing liquid level thanks to the large number of micro-bubbles in the water. In addition, the washing apparatus of the present disclosure not only improves the health care of the user by reducing the residue of washing product, but also effectively improves the satisfaction of the user by meeting the requirements of the user.

The flow disturbing part formed on the inner wall of the diameter-decreased conical passage part can help the water flow mix with the sucked-in air more effectively at a downstream position by increasing the turbulence of the water.

The bubbler includes a hole mesh and a hole mesh skeleton, and the hole mesh is attached to the outlet end of the one-piece spray pipe through the hole mesh skeleton. The hole mesh skeleton is provided with at least one overflow hole, and the at least one overflow hole is positioned close to the hole mesh. The overflow hole can prevent excess water from flooding the air inflow hole, thereby preventing a situation in which the micro-bubble water cannot be generated since the air cannot be sucked into the one-piece spray pipe due to blockage of the air inflow hole.

### BRIEF DESCRIPTION OF THE DRAWINGS

Preferred embodiments of the present disclosure will be described below with reference to the accompanying drawings, in which:
FIG. 1 is a schematic structural view of a first embodiment of a washing apparatus of the present disclosure;
FIG. 2 is a schematic structural view of a second embodiment of the washing apparatus of the present disclosure;
FIG. 3 is a schematic perspective view of an embodiment of a micro-bubble spray head of the washing apparatus of the present disclosure;
FIG. 4 is a top view of the embodiment of the micro-bubble spray head of the washing apparatus of the present disclosure shown in FIG. 3;
FIG. 5 is a left view of the embodiment of the micro-bubble spray head of the washing apparatus of the present disclosure shown in FIG. 3;
FIG. 6 is a front view of the embodiment of the micro-bubble spray head of the washing apparatus of the present disclosure shown in FIG. 3;
FIG. 7 is a cross-sectional view of the embodiment of the micro-bubble spray head of the washing apparatus of the present disclosure taken along section line A-A in FIG. 6;
FIG. 8 is a flowchart of a first embodiment of a water supply method for a washing apparatus of the present disclosure; and
FIG. 9 is a flowchart of a second embodiment of the water supply method for the washing apparatus of the present disclosure.

### List of reference signs:

1: pulsator washing machine; 11: cabinet; 12: tray; 13: upper cover; 14: foot of pulsator washing machine; 21: outer tub; 31: inner tub; 311: spin-drying hole; 32: pulsator; 33: transmission shaft of pulsator washing machine; 34: motor of pulsator washing machine; 35: balance ring; 41: drain valve; 42: drain pipe; 51: water inflow valve; 52: micro-bubble spray head; 521: one-piece spray pipe; 522: micro-bubble bubbler; 211: inlet end; 212: outlet end; 213: anti-disengagement part; 214A: first fixed installation part; 214B: second fixed installation part; 215: positioning part; 216: air inflow hole; 217: spray hole; 218: flow disturbing part; 219: diameter-decreased conical passage part; 219A: first-stage diameter-decreased conical passage; 219B: second-stage diameter-decreased conical passage; 221: hole mesh; 222: hole mesh skeleton; 223: overflow hole; 224: connection part of hole mesh; 225: pressure ring; 226: pressure ring hole; 300: annular gap; 9: drum washing machine; 91: shell; 92: outer cylinder; 93: inner cylinder; 931: motor of drum washing machine; 932: transmission shaft of drum washing machine; 933: bearing; 94: top panel; 95: control panel; 96: observation window; 97: door; 98: foot of drum washing machine.

### DETAILED DESCRIPTION OF THE EMBODIMENT(S) OF THE INVENTION

Preferred embodiments of the present disclosure will be described below with reference to the accompanying drawings. It should be understood by those skilled in the art that these embodiments are only used to explain the technical principle of the present disclosure, and are not intended to limit the scope of protection of the present disclosure.

It should be noted that in the description of the present disclosure, terms indicating directional or positional relationships, such as "upper", "lower", "left", "right", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first" and "second" are only used for descriptive purposes, and should not be interpreted as indicating or implying relative importance.

In addition, it should also be noted that in the description of the present disclosure, unless otherwise clearly specified and defined, terms "install", "arrange" and "connect" should be understood in a broad sense; for example, the connection may be a fixed connection, or may also be a detachable connection, or an integral connection; it may be a direct connection, or an indirect connection implemented through an intermediate medium, or it may be internal communication between two elements. For those skilled in the art, the specific meaning of the above terms in the present disclosure can be interpreted according to specific situations.

In order to solve the technical problem that the detergent dissolving efficiency of the existing washing machines is not high enough and the water saving effect is not good enough, the present disclosure provides a water supply method for a washing apparatus having a micro-bubble spray head for generating micro-bubble water. The water supply method includes: determining a total set value of a water inflow amount of the washing apparatus based on objects to be washed, after the washing apparatus is started; opening a first water inflow valve of the washing apparatus to inject the micro-bubble water; opening a second water inflow valve of the washing apparatus to inject non-micro-bubble water, when the water inflow amount of the micro-bubble water reaches a first set value; and completing a water inflow process of the washing apparatus when the water inflow amount of the washing apparatus reaches the total set value. The objects to be washed are, for example, the clothing that needs to be washed or other living goods that can be washed.

The present disclosure also provides a washing apparatus which has a micro-bubble spray head 52 for generating micro-bubble water and which uses the water supply method as described above. The micro-bubble spray head 52 includes a one-piece spray pipe 521, and a micro-bubble bubbler 522 fixed at an outlet end 212 of the one-piece spray pipe 521. A diameter-decreased conical passage part 219 is arranged in the one-piece spray pipe 521. An at-least-one-stage diameter-decreased conical passage is formed in the diameter-decreased conical passage part 219 in a water flow direction C and is configured to pressurize the water flow. A spray hole 217 is formed at a downstream end of the diameter-decreased conical passage part 219. The spray hole is configured such that a water flow pressurized by the at-least-one-stage diameter-decreased conical passage generates a negative pressure in the one-piece spray pipe 521 after being expanded and sprayed from the spray hole so that air can be sucked in. An air inflow passage is arranged on the one-piece spray pipe 521 and is positioned such that a large amount of air can be sucked into the one-piece spray pipe 521 through the air inflow passage by means of the negative pressure and mix with the water flow to produce bubble water; and when the bubble water passes through the micro-bubble bubbler 522, micro-bubble water is formed. Therefore, bubble water containing a large number of micro-bubbles can be generated in the washing apparatus through the micro-bubble spray head of this design. By firstly injecting such micro-bubble water into the washing apparatus, not only the detergent or washing powder can be dissolved efficiently and deposition of the detergent or washing powder can be avoided, but also the amount of water used can be reduced without lowering the washing liquid level thanks to the large number of micro-bubbles in the water, which is not only advantageous for the user's health, but also can improve the user experience.

The "diameter-decreased conical passage part" as used herein refers to a structure in which a diameter of the passage or a cross section of the passage formed inside this part is gradually decreased in the water flow direction so that the passage is substantially conical.

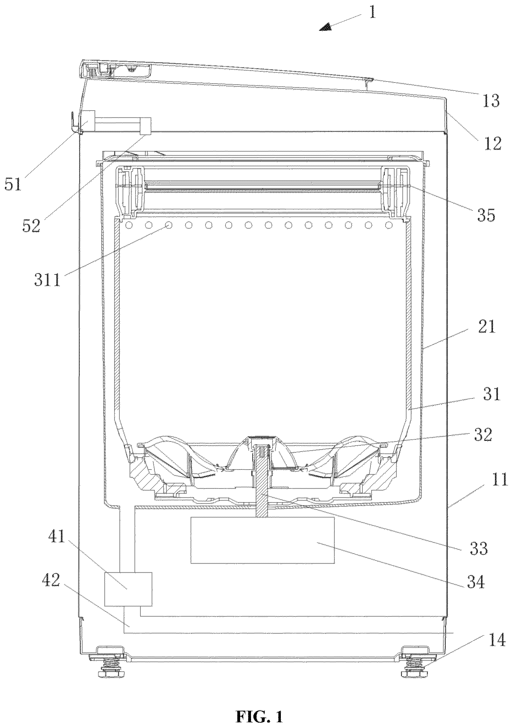

Reference is made to FIG. 1, which is a schematic structural view of a first embodiment of the washing apparatus of the present disclosure. In this embodiment, the washing apparatus is a pulsator washing machine 1. Alternatively, the washing apparatus of the present disclosure may be a washing-drying integrated machine.

As shown in FIG. 1, the pulsator washing machine 1 (hereinafter referred to as the washing machine) includes a cabinet 11. Feet 14 are provided at a bottom of the cabinet 11. An upper part of the cabinet 11 is provided with a tray 12, and the tray 12 is pivotally connected with an upper cover 13. An outer tub 21 serving as a water containing tub is provided inside the cabinet 11. An inner tub 31 is arranged in the outer tub 21, a pulsator 32 is arranged at a bottom of the inner tub 31, and a motor 34 is fixed at a lower part of the outer tub 21. The motor 34 is drivingly connected with the pulsator 32 through a transmission shaft 33. A spin-drying hole 311 is provided on a side wall of the inner tub 31 close to a top end. A drain valve 41 is provided on a drain pipe 42, and an upstream end of the drain pipe 42 communicates with a bottom of the outer tub 21. The washing machine further includes a water inflow valve 51 and a micro-bubble spray head 52 communicating with the water inflow valve 51, and the micro-bubble spray head 52 is installed at a top of the outer tub 21. Water enters the micro-bubble spray head 52 through the water inflow valve 51 to generate micro-bubble water containing a large number of micro-bubbles. The micro-bubble spray head 52 sprays the micro-bubble water into a detergent box to mix with a detergent, and then the micro-bubble water enters the inner tub 31 through the detergent box for clothing washing. The micro-bubbles in the water impact the detergent during the breaking up process, and negative charges carried by the micro-bubbles can also adsorb the detergent, so the micro-bubbles can increase a mixing degree of the detergent and the water, thereby reducing the amount of detergent used and a residual amount of detergent in the clothing. In addition, the micro-bubbles in the inner tub 31 will also impact stains on the clothing, and will adsorb foreign matters that generate the stains. Therefore, the micro-bubbles also enhance a stain removal performance of the washing machine. Optionally, the micro-bubble spray head can also directly spray the micro-bubble water carrying a large number of micro-bubbles into the outer tub 21 or the inner tub 31 of the washing machine to further reduce the amount of detergent used and enhance the cleaning ability of the washing machine.

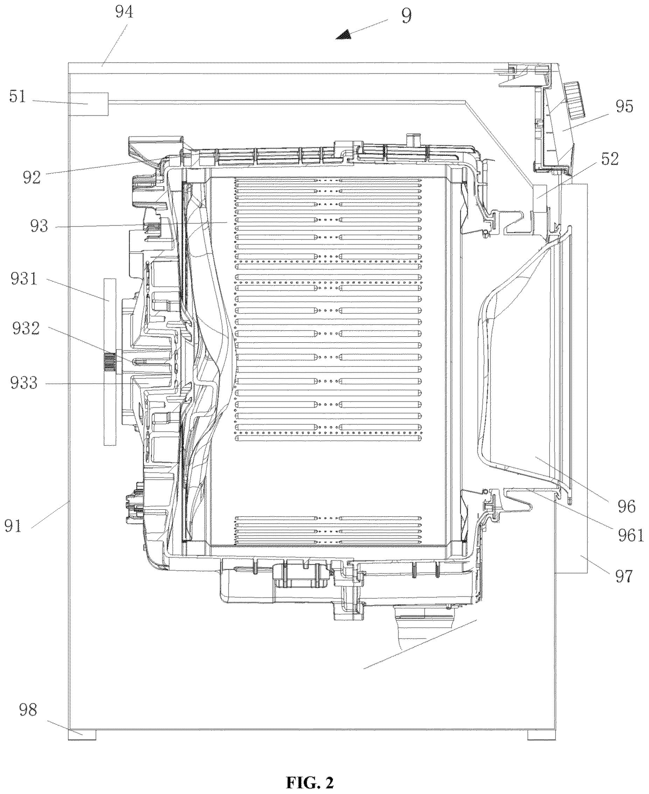

Reference is made to FIG. 2, which is a schematic structural view of a second embodiment of the washing apparatus of the present disclosure. In this embodiment, the washing apparatus is a drum washing machine 9.

As shown in FIG. 2, the drum washing machine 9 includes a shell 91 and feet 98 located at a bottom of the shell. A top panel 94 is provided at a top of the shell 91. A front side of the shell 91 (an operation side facing the user) is provided with a door 97 that allows the user to put clothing and the like into the drum washing machine, and the door 97 is also provided with an observation window 96 for viewing an interior of the washing machine. A sealing window gasket 961 is also provided between the observation window 96 and the shell 91, and the sealing window gasket 961 is fixed on the shell 91. A control panel 95 of the drum washing machine 9 is arranged on an upper part of the front side of the shell 91 to facilitate the user's operation. An outer cylinder 92 and an inner cylinder 93 are arranged inside the shell 91. The inner cylinder 93 is positioned inside the outer cylinder 92. The inner cylinder 93 is connected to a motor 931 (e.g., a direct drive motor) through a transmission shaft 932 and a bearing 933. A water inflow valve 51 is provided on an upper part of a rear side of the shell 91, and the water inflow valve 51 is connected to a micro-bubble spray head 52 through a water pipe. As shown in FIG. 2, the micro-bubble spray head 52 is positioned close to the upper part of the front side of the shell 91 and located below the control panel 95. Similar to the above embodiment, water enters the micro-bubble spray head 52 through the water pipe from the water inflow valve 51 to generate micro-bubble water containing a large number of micro-bubbles. The micro-bubble spray head 52 sprays the micro-bubble water into a detergent box to mix with a detergent, and then the micro-bubble water enters the inner cylinder 93 through the detergent box for clothing washing. Optionally, the micro-bubble spray head 52 can also directly spray the micro-bubble water carrying a large number of micro-bubbles into the outer cylinder 92 or the inner cylinder 93 of the washing machine to further reduce the amount of detergent used and enhance the cleaning ability of the washing machine.

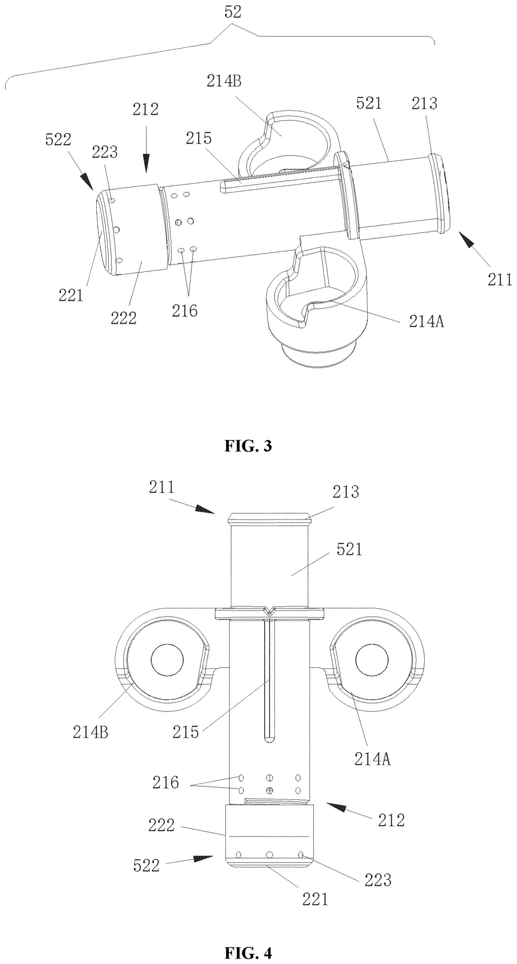

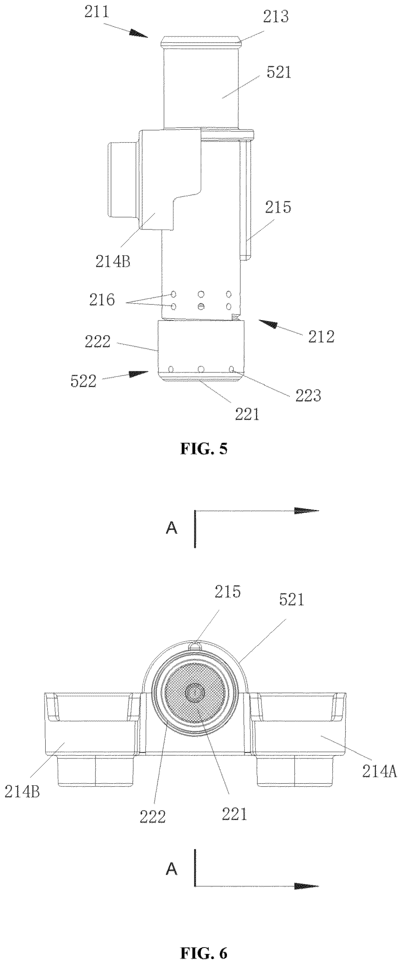

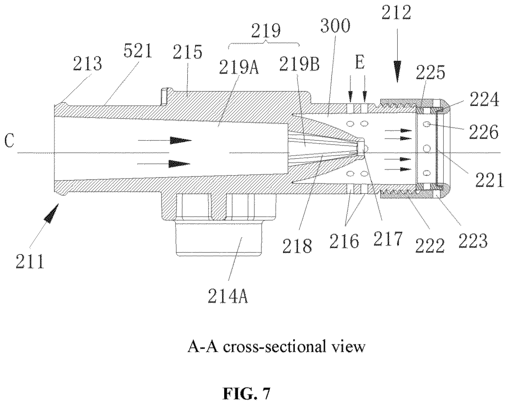

Reference is made to FIGS. 3 to 7, which are schematic views of the embodiment of the micro-bubble spray head 52 of the washing apparatus of the present disclosure, in which FIG. 3 is a schematic perspective view of an embodiment of the micro-bubble spray head of the washing apparatus of the present disclosure, FIG. 4 is a top view of the embodiment of the micro-bubble spray head of the washing apparatus of the present disclosure shown in FIG. 3, FIG. 5 is a left view of the embodiment of the micro-bubble spray head of the washing apparatus of the present disclosure shown in FIG. 3, FIG. 6 is a front view of the embodiment of the micro-bubble spray head of the washing apparatus of the present disclosure shown in FIG. 3, and FIG. 7 is a cross-sectional view of the embodiment of the micro-bubble spray head of the washing apparatus of the present disclosure taken along section line A-A in FIG. 6. As shown in FIGS. 3-7, in one or more embodiments, the micro-bubble spray head 52 of the washing apparatus of the present disclosure includes a one-piece spray pipe 521. A micro-bubble bubbler 522 is installed at an outlet end 212 of the one-piece spray pipe 521, and the micro-bubble bubbler 522 is configured to be capable of cutting and mixing the bubble water as it flows through the micro-bubble bubbler 522 so as to produce micro-bubble water containing a large number of micro-bubbles.

Referring to FIG. 3, in one or more embodiments, the one-piece spray pipe 521 has an inlet end 211 and an outlet end 212. The micro-bubble bubbler 522 is fixed at the outlet end 212, and the inlet end 211 is configured to be connected to an external water source. Optionally, an anti-disengagement part 213 may be provided at the inlet end 211, such as an anti-disengagement rib protruding radially outward around an outer wall of the inlet end 211 or an annular groove structure recessed inward from the outer wall of the inlet end 211. The anti-disengagement part can prevent the one-piece spray pipe from falling off a connected pipeline which provides water supply.

With continued reference to FIG. 3, in one or more embodiments, the outer wall of the one-piece spray pipe 521 is provided with a first fixed installation part 214A, a second fixed installation part 214B, and a positioning part 215, which are used to position and fix the micro-bubble spray head 52 to a predetermined position.

With reference to FIGS. 4 to 6, the first fixed installation part 214A and the second fixed installation part 214B are symmetrically positioned on the outer wall of the one-piece spray pipe 521, and are located in the middle of the one-piece spray pipe 521. The positioning part 215 is a long-strip-shaped rib, which protrudes radially outward from the outer wall of the one-piece spray pipe 521 and extends in a longitudinal direction of the one-piece spray pipe 521. The first fixed installation part 214A and the second fixed installation part 214B are distributed on both sides of the positioning part 215. Optionally, only one fixed installation part is provided on the one-piece spray pipe 521, and the positioning part 215 may also be in other suitable forms.

In one or more embodiments, the first and second fixed installation parts 214A, 214B are screw hole structures so that the spray head 52 can be fixed to a target position by screws. However, the fixed installation parts may be any suitable connection structure, such as a snap-fit connection structure, a welded connection structure, and the like.

Referring to FIG. 7, a diameter-decreased conical passage part 219 is provided in the one-piece spray pipe 521. There are a first-stage diameter-decreased conical passage 219A and a second-stage diameter-decreased conical passage 219B in the diameter-decreased conical passage part 219 in the water flow direction C. A smallest diameter of the first-stage diameter-decreased conical passage 219A is larger than a largest diameter of the second-stage diameter-decreased conical passage 219B. A spray hole 217 is formed at a downstream end of the diameter-decreased conical passage part. The spray hole 217 communicates the first-stage diameter-decreased conical passage 219A and the second-stage diameter-decreased conical passage 219B with a downstream passage of the one-piece spray pipe 521. In one or more alternative embodiments, only one stage of diameter-decreased conical passage may be formed in the diameter-decreased conical passage part 219, or more than two stages of diameter-decreased conical passage may be formed in the diameter-decreased conical passage part 219.

With continued reference to FIG. 7, a flow disturbing part 218 is formed on an inner wall of the second-stage diameter-decreased conical passage 219B. In one or more embodiments, the flow disturbing part 218 is at least one flow disturbing rib extending longitudinally along the inner wall of this stage of diameter-decreased conical passage, such as a plurality of flow disturbing ribs. In an alternative embodiment, the flow disturbing part 218 may be at least one radial protrusion on the inner wall of this stage of diameter-decreased conical passage, such as one or more cylindrical protrusions. In an alternative embodiment, the flow disturbing part 218 may also be formed on an inner wall of the first-stage diameter-decreased conical passage 219A, or the inner wall of each stage of the diameter-decreased conical passage may have a flow disturbing part formed thereon.

As shown in FIG. 7, an outer wall of the part of the diameter-decreased conical passage part 219 that corresponds to the second-stage diameter-decreased conical passage 219B is separate from the inner wall of the one-piece spray pipe 521, so that an annular gap 300 is formed between this outer wall and the inner wall of the one-piece spray pipe 521. The annular gap 300 facilitates the mixing of air and the water flow, thereby generating more micro-bubbles.

As shown in FIG. 7, the pipe wall of the one-piece spray pipe 521 is formed with a plurality of air inflow holes 216 arranged in two rows to form a ring shape, and these air inflow holes together form an air inflow passage of the one-piece spray pipe 521. These air inflow holes 216 are all positioned close to the spray hole 217. The water flow enters from the inlet end 211 of the one-piece spray pipe 521 and first flows through the first-stage diameter-decreased conical passage 219A and the second-stage diameter-decreased conical passage 219B to pressurize (accelerate) the water flow, whereas the flow disturbing part 218 increases the turbulence of the water flow; the pressurized water flow is quickly expanded and sprayed into the downstream passage of the one-piece spray pipe 521 from the spray hole 217, and generates a negative pressure therein; under the action of the negative pressure, a large amount of outside air is sucked into the one-piece spray pipe 521 from the air inflow holes 216 in a direction E and mix with the water flow in the one-piece spray pipe 521 to produce bubble water. In alternative embodiments, more or fewer air inflow holes may be provided as needed, and they may be arranged in other ways, such as in a staggered arrangement.

With continued reference to FIGS. 3 to 7, the micro-bubble bubbler 522 includes a hole mesh 221 and a hole mesh skeleton 222. The hole mesh 221 is attached to the outlet end 212 of the one-piece spray pipe 521 through the hole mesh skeleton 222.

In one or more embodiments, the hole mesh 221 has at least one fine hole having a diameter reaching a micron scale. Preferably, the diameter of the fine hole is between 0 and 1000 microns; more preferably, the diameter of the fine hole is between 5 microns and 500 microns. The hole mesh 221 can be a plastic fence, a metal mesh, a macromolecular material mesh, or other suitable hole mesh structures. The plastic fence usually refers to a macromolecular fence, which is integrally injection-molded by using a macromolecular material; or a macromolecular material is first made into a plate, and then a microporous structure is formed on the plate by machining to form the plastic fence. The macromolecular material mesh usually refers to a mesh with a microporous structure made by first making a macromolecular material into wires, and then weaving the wires. The macromolecular material mesh may include nylon mesh, cotton mesh, polyester mesh, polypropylene mesh, and the like. Alternatively, the hole mesh 221 may be other hole mesh structures capable of generating micro-bubbles, such as a hole mesh structure composed of two non-micron-scale honeycomb structures. When the bubble water flows through the hole mesh 221, the hole mesh 221 mixes and cuts the bubble water, thereby generating micro-bubble water.

Referring to FIG. 7, the hole mesh skeleton 222 is cylindrical so that it can be sleeved over the outlet end 212 of the one-piece spray pipe 521. According to the invention, an inner wall of the hole mesh skeleton 222 is provided with internal threads to mesh with external threads on the outer wall of the outlet end 212. A set gap is reserved between the meshing external threads and internal threads to allow air to be sucked into the one-piece spray pipe through the gap. In alternative embodiments, not forming part of the present invention, the hole mesh skeleton 222 may be connected to the outlet end of the one-piece spray pipe 521 by other connection means, such as welding.

As shown in FIG. 7, in one or more embodiments, the hole mesh skeleton 222 is provided with a plurality of overflow holes 223 along its periphery, and these overflow holes are positioned close to the hole mesh 221. When the bubble water cannot pass through the hole mesh 221 in time, the excess bubble water can flow out from the overflow holes 223, thereby preventing the excess water from flowing back and flooding the air inflow holes 216. Therefore, the overflow holes 223 can prevent a situation in which the air cannot be sucked into the one-piece spray pipe due to the blockage of the air inflow hole so that the micro-bubble water cannot be generated. In alternative embodiments, more or fewer overflow holes 223 may be provided as needed.

With further reference to FIG. 7, in one or more embodiments, a pressure ring 225 is also provided between the hole mesh skeleton 222 and the outlet end 212 of the one-piece spray pipe 521. Correspondingly, a connection part 224 is provided on the periphery of the hole mesh 221. The pressure ring 225 presses the connection part 224 on the inner wall of the end of the hole mesh skeleton 222, so that the hole mesh 221 can be firmly fixed, and that the hole mesh 221 will not fall off the outlet end 212 of the one-piece spray pipe 521 when it is impacted by high-pressure water flow. In an alternative embodiment, the hole mesh 221 can also be fixed by other structures; for example, the hole mesh is clamped by a circlip. In one or more embodiments, the pressure ring 225 is also provided with a plurality of pressure ring holes 226. When the flow rate of the jet water flow is not large, these pressure ring holes 226 can be used to suck in the air to mix with the water flow. When the flow rate of the jet water flow is relatively large, part of the water is allowed to overflow from these pressure ring holes 226, which can not only help clean the hole mesh, but also can prevent excess water from flowing back through the air inflow passage to make it impossible to suck in the air through the air inflow passage.

The water supply method for the washing apparatus of the present disclosure will be described below based on the embodiments of the above pulsator washing machine and drum washing machine of the present disclosure.

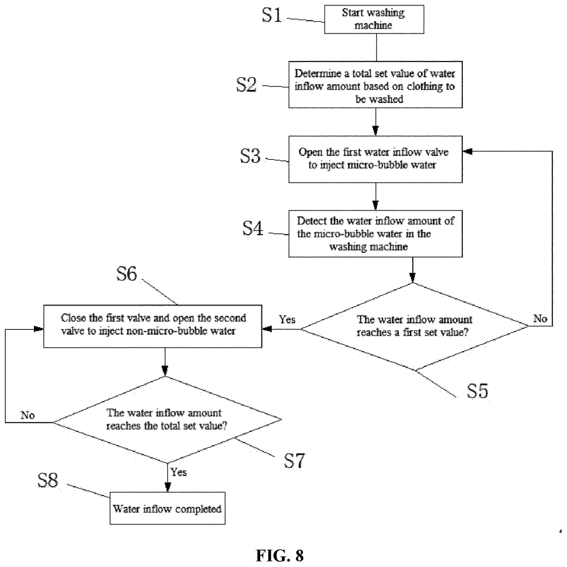

FIG. 8 is a flowchart of a first embodiment of the water supply method for the washing apparatus of the present disclosure. As shown in FIG. 8, in this embodiment, the pulsator washing machine or drum washing machine is first powered on so that the washing machine is started (step S1). Then, the clothing to be washed in the washing machine is weighed, and based on the obtained weight of the clothing to be washed, a total set value of a water inflow amount of the washing machine is determined (step S2). Optionally, based on the obtained weight of the clothing to be washed, a dispensing amount of the detergent or washing powder can also be determined. Further, in step S3, firstly, a first water inflow valve (not shown in the figure) of the washing machine is opened to inject micro-bubble water into the detergent box of the washing machine. The micro-bubble water is generated by the micro-bubble spray head 52 of the washing machine. After starting to inject the micro-bubble water, a control system of the washing machine is responsible for detecting the water inflow amount in the washing machine (which is also the water inflow amount of the micro-bubble water) (step S4) and judging whether the water inflow amount of the micro-bubble water reaches a first set value predetermined by the system (step S5). Optionally, the water inflow amount may be obtained based on the water inflow level in the washing machine, or may be obtained based on the flow rate of the micro-bubble spray head and the duration of micro-bubble water injection. When the water inflow amount of the micro-bubble water does not reach the first set value, the first water inflow valve remains open to continue micro-bubble water injection. When the water inflow amount of the micro-bubble water reaches the first set value, the first water inflow valve is closed (so the injection of micro-bubble water is stopped), and at the same time, a second water inflow valve (not shown in the figure) of the washing machine is opened to inject non-micro-bubble water into the washing machine, such as tap water or well water (step S6). The control system of the washing machine continues to detect the water inflow amount in the washing machine (including the micro-bubble water and the non-micro-bubble water) and judges whether the water inflow amount in the washing machine reaches the preset total set value (step S7). When the water inflow amount in the washing machine does not reach the preset total set value, the second water inflow valve remains open to continue non-micro-bubble water injection. When the water inflow amount in the washing machine reaches the preset total set value, the second water inflow valve is closed, and the water inflow process of the washing machine is completed (step S8). The washing machine can then proceed to a process set by the user, such as washing.

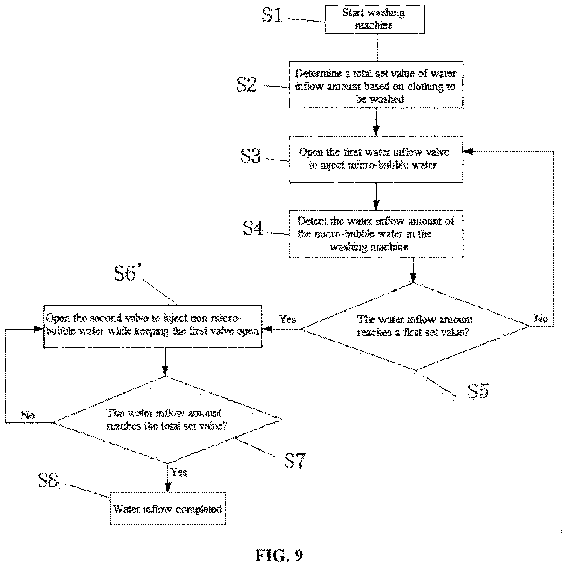

FIG. 9 is a flowchart of a second embodiment of the water supply method for the washing apparatus of the present disclosure. As shown in FIG. 9, in this embodiment, steps S1, S2, S3, S4 and S5 are respectively the same as steps S1, S2, S3, S4 and S5 in the above embodiment. In step S5, when it is judged that the water inflow amount of the micro-bubble water has reached the first set value, the second water inflow valve is opened to inject non-micro-bubble water into the washing machine, and at the same time, the first water inflow valve is kept open to continue micro-bubble water injection (step S6'). In other words, according to step S6', after the water inflow amount of the micro-bubble water has reached the first set value, the washing machine is injected with the micro-bubble water and the non-micro-bubble water at the same time. The control system of the washing machine also continues to detect the water inflow amount in the washing machine (including the micro-bubble water and the non-micro-bubble water) and judges whether the water inflow amount in the washing machine reaches the preset total set value (step S7). When the water inflow amount in the washing machine does not reach the preset total set value, both the first and second water inflow valves are kept open. When the water inflow amount in the washing machine reaches the preset total set value, the first and second water inflow valves are closed, and the water inflow process of the washing machine is completed (step S8). The washing machine can then proceed to a process set by the user, such as washing.

## Claims

1. A washing apparatus, wherein the washing apparatus has an inner tub (31) or an inner cylinder (93), a micro-bubble spray head (52) for generating micro-bubble water, a detergent box, a first water inflow valve, and a second water inflow valve,
wherein the micro-bubble spray head (52) comprises a one-piece spray pipe (521), and a micro-bubble bubbler (522) fixed at an outlet end (212) of the one-piece spray pipe (521);
wherein a diameter-decreased conical passage part (219) is arranged in the one-piece spray pipe (521), an at-least-one-stage diameter-decreased conical passage is formed in the diameter-decreased conical passage part (219) in a water flow direction, and a spray hole (217) is formed at a downstream end of the diameter-decreased conical passage part (219); the spray hole (217) is configured such that a water flow pressurized by the at-least-one-stage diameter-decreased conical passage generates a negative pressure in the one-piece spray pipe (521) after being expanded and sprayed from the spray hole (217);
wherein the washing apparatus is configured to: determine a total set value of a water inflow amount of the washing apparatus based on objects to be washed, after the washing apparatus is started; open a first water inflow valve of the washing apparatus to inject the micro-bubble water; open a second water inflow valve of the washing apparatus to inject non-micro-bubble water, when a water inflow amount of the micro-bubble water reaches a first set value; and complete a water inflow process of the washing apparatus when the water inflow amount of the washing apparatus reaches the total set value and **characterized in that** the washing apparatus further comprises:
an air inflow passage is arranged on the one-piece spray pipe (521) and is positioned such that air can be sucked into the one-piece spray pipe (521) through the air inflow passage by means of the negative pressure and mix with the water flow to produce bubble water; and when the bubble water passes through the micro-bubble bubbler (522), the micro-bubble water is formed; and
wherein the micro-bubble bubbler (522) comprises a hole mesh (221) and a hole mesh skeleton (222), and the hole mesh (221) is attached to the outlet end (212) of the one-piece spray pipe (521) through the hole mesh skeleton (222),
wherein an inner wall of the hole mesh skeleton (222) is provided with internal threads to mesh with external threads on the outer wall of the outlet end (212) and wherein a set gap is reserved between the meshing external threads and internal threads to allow air to be sucked into the one-piece spray pipe through the gap.

2. The washing apparatus according to claim 1, wherein a flow disturbing part (218) is formed on an inner wall of the diameter-decreased conical passage part (219).

3. The washing apparatus according to claim 2, wherein the flow disturbing part (218) is at least one radial protrusion arranged on the inner wall of the diameter-decreased conical passage part (219) or at least one flow disturbing rib extending longitudinally along the inner wall of the diameter-decreased conical passage part (219).

4. The washing apparatus according to claim 1, wherein the hole mesh skeleton (222) is provided with at least one overflow hole (223), and the at least one overflow hole (223) is positioned close to the hole mesh (221).

5. The washing apparatus according to claim 1, wherein the hole mesh (221) has at least one fine hole having a diameter reaching a micron scale.

## Patentansprüche

1. Eine Waschvorrichtung, wobei die Waschvorrichtung eine Innenwanne (31) oder einen Innenzylinder (93), einen Mikroblasensprühkopf (52) zur Erzeugung von Mikroblasenwasser, einen Waschmittelkasten, ein erstes Wasserzuflussventil und ein zweites Wasserzuflussventil;
wobei der Mikroblasenspritzkopf (52) ein einteiliges Sprührohr (521) und einen Mikroblasensplitzkopf (522) umfasst, der an einem Austrittsende (212) des einteiligen Sprührohrs (521) befestigt ist;
wobei in dem einteiligen Sprührohr (521) ein durchmesserverminderter konischer Durchgangsteil (219) angeordnet ist, in dem durchmesserverminderten konischen Durchgangsteil (219) in Wasserströmungsrichtung ein mindestens einstufiger Durchmesser verringerter konischer Durchgang gebildet wird und an einem nachgeschalteten Ende des durchmesserverminderten konischen Durchgangsteils (219) ein Sprühloch (217) gebildet wird; das Sprühloch (217) so konfiguriert ist, dass ein durch den mindestens einstufigen Durchmesser verringerten konischen Durchgang unter Druck stehender Wasserstrom einen Unterdruck im einteiligen Sprühloch (521) erzeugt, nachdem es aus dem Sprühloch expandiert und besprüht wurde (217);
wobei die Waschvorrichtung so konfiguriert ist, dass sienach dem Starten der Waschvorrichtung auf der Grundlage von zu waschenden Gegenständen einen Gesamtwert einer Wasserzuflussmenge der Waschvorrichtung bestimmt; Öffnen Sie ein erstes Wasserzuflussventil der Waschvorrichtung, um das Mikroblasenwasser einzuspritzen; Öffnen Sie ein zweites Wasserzuflussventil der Waschvorrichtung, um Nicht-Mikroblasenwasser einzuspritzen, wenn eine Wasserzuflussmenge des Mikroblasenwassers einen ersten eingestellten Wert erreicht; und einen Wasserzuflussprozess der Waschvorrichtung abschließen, wenn die Wasserzuflussmenge der Waschvorrichtung den Sollwert erreicht und **dadurch gekennzeichnet ist, dass** die Waschvorrichtung weiter umfasst:
ein Lufteintrittskanal ist auf dem einteiligen Sprührohr (521) angeordnet und so positioniert, dass Luft durch den Lufteintrittskanal mittels Unterdruck in das einteilige Sprührohr (521) gesaugt und mit dem Wasserstrom vermischt werden kann, um Blasenwasser zu erzeugen; und wenn das Blasenwasser durch den Mikroblasenblasen-Bubbler (522) fließt, wird das Mikroblasenwasser gebildet; und
wobei der Mikroblasenblasen-Bubbler (522) ein Lochgeflecht (221) und ein Lochgeflecht-Skelett (222) umfasst und das Lochgeflecht (221) durch das Lochgeflecht-Skelett (212) des einteiligen Spritzrohrs (521) befestigt ist,
wobei eine Innenwand des Lochgitterskeletts (222) mit Innengewinden versehen ist, um mit Außengewinden an der Außenwand des Auslassendes (212) zu vernetzen, und wobei zwischen den Netzaußengewinden und Innengewinden ein eingestellter Spalt reserviert ist, um Luft durch den Spalt in das einteilige Sprührohr anzusaugen.

2. Die Waschvorrichtung gemäß Anspruch 1, wobeian einer Innenwand des durchmesserverminderten konischen Durchgangsteils (219) ein strömungsstörender Teil (218) gebildet wird.

3. Die Waschvorrichtung gemäß Anspruch 2, wobei der strömungsstörende Teil (218) mindestens ein radialer Vorsprung an der Innenwand des durchmesserverminderten konischen Durchgangsteils (219) oder mindestens eine strömungsstörende Rippe ist, die sich längs entlang der Innenwand des durchmesserverminderten konischen Durchgangsteils (219) erstreckt.

4. Die Waschvorrichtung gemäß Anspruch 1, wobei das Lochgitterskelett (222) mit mindestens einem Überlaufloch (223) versehen ist und das mindestens eine Überlaufloch (223) nahe dem Lochgitter (221) positioniert ist.

5. Die Waschvorrichtung gemäß Anspruch 1, wobei das Lochgitter (221) mindestens ein feines Loch aufweist, das einen Durchmesser hat, der eine Mikrometerskala erreicht.

## Revendications

1. Appareil de lavage, Dans lequel en ce qu'il comporte une cuve interne (31) ou un cylindre interne (93), une tête de pulvérisation à microbulles (52) pour produire de l'eau microbullée, une cartouche de détergent, une première vanne d'admission d' ;
Dans lequel la tête de pulvérisation à microbulles (52) comprend un tube de pulvérisation monobloc (521) et un mousseur à microbulles (522) fixé à l'extrémité de sortie (212) dudit tube de pulvérisation monobloc;
Dans lequel la tuyère monobloc (521) est pourvue d'une portion de passage conique (219) de diamètre réduit dans laquelle est ménagé au moins un étage de passage conique (219) de diamètre réduit dans le sens de l'écoulement de l'eau, et d'un orifice de pulvérisation (217) à l'extrémité aval de la portion de passage conique (219) de diamètre réduit; L'orifice d'injection (217) est configuré pour que le flux d'eau pressurisé par le canal conique de diamètre réduit de l'au moins un étage crée une dépression dans le tube d'injection monobloc (521) après avoir été détendu hors de l'orifice d'injection (217) et éjecté;
Dans lequel l'installation de lavage est configurée pour: déterminer une valeur de consigne totale de la quantité d'eau entrante de l'installation de lavage à partir des objets à laver, après mise en marche de l'installation de lavage; Ouverture de la première vanne d'entrée d'eau du dispositif de lavage, injection d'eau micropulfurée; Ouverture de la deuxième vanne d'entrée d'eau de l'appareil de lavage pour injecter de l'eau non micropulfurée lorsque la quantité d'eau d'entrée d'eau micropulfurée atteint la première valeur de consigne; Le procédé d'entrée d'eau de l'installation de lavage est terminé lorsque la quantité d'eau d'entrée de l'installation de lavage atteint une valeur de consigne totale, **caractérisé en ce que** l'installation de lavage comprend en outre:
Un canal d'entrée d'air est prévu sur la tuyère monobloc (521) dans une position telle que l'air peut être aspiré dans la tuyère monobloc par la dépression à travers le canal d'entrée d'air et mélangé au flux d'eau pour produire de l'eau gazeuse; De l'eau gazeuse se forme lorsqu'elle traverse le microbulleur (522); Et
Dans lequel Le mousseur à microbulles (522) comprend un réseau de trous (221) et un squelette de réseau de trous (222),
Dans lequel **en ce que** la paroi interne du squelette (222) est munie d'un filetage interne pour venir en prise avec un filetage externe de la paroi externe de l'extrémité de sortie (212) et **en ce qu'**un jeu déterminé est ménagé entre le filetage externe et le filetage interne en prise pour permettre l'aspiration d'air dans La tuyère monobloc à travers ledit jeu.

2. Appareil de lavage selon la revendication 1, **caractérisé en ce qu'**une partie perturbatrice d'écoulement (218) est formée sur la paroi interne de la partie de passage conique (219) de diamètre réduit.

3. Appareil de lavage selon la revendication 2, **caractérisé en ce que** la partie de brouillage (218) est au moins une saillie radiale disposée sur la paroi interne de la partie de passage conique (219) de diamètre réduit ou au moins une nervure de brouillage s'étendant longitudinalement le long de la paroi interne de la partie de passage conique (219) de diamètre réduit.

4. Appareil de lavage selon la revendication 1, **caractérisée en ce que** le squelette de maille (222) est muni d'au moins un orifice de trop - plein (223) et **en ce que** ledit au moins un orifice de trop - plein (223) est situé à proximité dudit réseau d'orifices (221).

5. Appareil de lavage selon la revendication 1, **caractérisé en ce que** le réseau poreux (221) présente au moins un trou fin dont le diamètre atteint l'ordre du micromètre.
